# EUROPÄISCHE PATENTANMELDUNG

(11) **EP 4 491 596 A1**
(43) Veröffentlichungstag der Anmeldung: **15.01.2025**
(21) Anmeldenummer: 24185865.3
(22) Anmeldetag: 02.07.2024
(51) Int. Cl.: C04B 26/06, C04B 26/14, C08F 290/06, C08F 292/00

(54) **RADIKALISCH HÄRTBARES KUNSTHARZ-BEFESTIGUNGSSYSTEM MIT REAKTIVVERDÜNNER AUSGEWOGENER POLARITÄT**

(30) Priorität: 13.07.2023 DE 102023118532; 18.06.2024 DE 102024117056
(71) Anmelder: fischerwerke GmbH & Co. KG, 72178 Waldachtal (DE)
(72) Erfinder: Weinelt, Christian, 79331 Teningen (DE); Vogel, Martin, 79183 Waldkirch (DE); Arnold, Julia, 79110 Freiburg (DE); Assadi, Amir, 79312 Emmendingen (DE)
(74) Vertreter: Suchy, Ulrich Johannes

(57) **Zusammenfassung**

Ein radikalisch härtbares Kunstharz-Befestigungssystem, welches eine Reaktivharzkomponente und eine Härterkomponente umfasst, wobei die Reaktivharzkomponente ein oder mehrere Reaktivverdünner mit ausgewogener Polarität beinhaltet, und weitere damit in Verbindung stehende Erfindungsgegenstände.

## Beschreibung

Die Erfindung betrifft ein radikalisch härtbares Kunstharz-Befestigungssystem, welches eine Reaktivharzkomponente und eine Härterkomponente umfasst, wobei die Reaktivharzkomponente ein oder mehrere Reaktivverdünner mit ausgewogener Polarität beinhaltet, die Verwendung des oder der Reaktivverdünner mit ausgewogener Polarität als Reaktivverdünner für ein derartiges Kunstharz-Befestigungssystem, Verfahren zur Herstellung des Kunstharz-Befestigungssystems und die Verwendung eines derartigen Kunstharz-Befestigungssystems zur Befestigung von beispielsweise Verankerungsmitteln in Bohrlöchern oder Spalten in Bausubstraten, die Verwendung zur Erhöhung der Robustheit eines radikalisch härtbaren Kunstharzsystems, sowie ein Verfahren zur Befestigung von beispielsweise Verankerungsmitteln in Bohrlöchern oder Spalten unter Verwendung eines besagten Kunstharz-Befestigungssystems, das mindestens einen dieser radikalisch härtbaren Reaktivverdünner beinhaltet.

Die wesentlichen Einflussgrößen auf die Leistungsfähigkeit des Kunstharz-Befestigungssystems liegen in der Qualität der Bohrlochreinigung und der Feuchtigkeit des mineralischen Untergrunds. In feuchten und schlecht gereinigten Bohrlöchern tritt eine erhebliche verminderte Leistungsfähigkeit ein, was sich in verringerten Lastwerten bzw. Versagensverbundspannungen widerspiegelt. Die Widerstandsfähigkeit gegenüber diesen Einflussgrößen wird als Robustheit (Robustness) des Kunstharz-Befestigungssystem bezeichnet. Im sogenannten "Robustness Test" - damit ist gemeint, dass die Systeme einen möglichst geringen Unterschied in den resultierenden Werten für die Leistungsfähigkeit (charakterisiert insbesondere durch die Verbundspannung) bei Vergleich in der Anwendung in feuchten und trockenen Bohrlöchern in Bausubstraten aufweisen - ist es anzustreben, dass der Quotient aus ermittelter Verbundspannung im feuchten und schlecht gereinigten Bohrloch (nachfolgend mit B7 abgekürzt) zu Verbundspannung in trockenem, gut gereinigten Bohrloch (nachfolgend mit R1 abgekürzt) ≥ 0,9 liegt (B7/R1 ≥ 0,9).

Um den Leistungsabfall in feuchten und schlecht gereinigten Bohrlöchern zu überwinden, werden gemäß der DE 102010013196 A1 der Harzkomponente als weiteren Bestandteil mindestens ein Methacryloxyalkyltrialkoxysilan und/oder ein Poly(meth)acryloxyalkylsilsesquioxan zugefügt.

Die EP 3 851 423 A1 schlägt zur Verbesserung der Haftung an der Oberfläche von halbgereinigten und/oder feuchten Bohrlöchern in mineralischen Untergründen die Verwendung einer unpolaren Reaktionsharzmischung in der Harzkomponente einer Mörtelmasse vor. Bevorzugt werden die Reaktivverdünner zur Herstellung einer unpolaren Reaktionsharzmischung ausgewählt aus der Gruppe bestehend aus Ethylmethacrylat (EMA), 3,3,5-Trimethylcyclohexyl methacrylate (TMCHMA), Isobornyl Methacrylate (IBOMA), Isobutyl methacrylat (i-BMA), Tetrahydrofurfuryl methacrylat (THFMA), 2-Ethylhexylmethacrylat (2-HEMA), Cyclohexylmethacrylat (c-HMA), Allylmethacrylat (AMA), Benzylmethacrylat (BNMA), Isodecylmethacrylat (IDMA), 1,12-Dodecandioldimethacrylat (1,12-DDDDMA), 1,6-Hexandiol-dimethacrylat (1,6-HDDMA), 1,4-Butandioldimethacrylat (1,4-BDDMA), 1,3- Butandioldimethacrylat (1,3-BDDMA), Ethylengylcoldimethacrylat (EGDMA) und Glyceroldimethacrylat.

Es hat sich gezeigt, dass weder die Lehre aus DE 102010013196 A1 noch die unpolare Reaktionsharzmischung gemäß EP 3 851 423 A1 und auch die kombinierte Lehre aus beiden Patentanmeldungen zu robusten Kunstharz-Befestigungssystemen mit einem Quotienten B7/R1 ≥ 0,9 führen.

Vor diesem Hintergrund bestand die Aufgabe der hier dargelegten Erfindung darin neue-aus dem Stand der Technik bislang nicht bekannte bzw. hierfür nicht vorgesehene-Reaktivverdünner zu finden, die zu äußerst robusten (Quotient B7/R1 ≥ 0,9) Kunstharz-Befestigungssystemen führen. Die Erfindung betrifft nun allgemein ein Kunstharz-Befestigungssystem wie eingangs erwähnt, wobei als Reaktivverdünner mit ausgewogener Polarität, ein Reaktivverdünner der in einem Polaritätsbereich zwischen hydrophil und hydrophob liegt, zu verstehen ist, insbesondere wie nachstehend definiert.

Ein Beispiel für hydrophile Reaktivverdünner ist Polyethylenglykol200dimethacrylat (PEG200DMA), ein Beispiel für einen hydrophoben Reaktivverdünner ist 1,4-Butandioldimethacrylat (BDDMA) wie in EP 3 851 423 A1 erwähnt.

Überraschenderweise konnte festgestellt werden, dass die erfindungsgemäß zu verwendenden Reaktivverdünner zu äußerst robusten Kunstharz-Befestigungssystemen führen, welche im robustness test (Robustheitstest, Vergleich von R1, B7) einen Quotienten B7/R1 von ≥ 0,80 vorzugsweise von ≥ 0,89, insbesondere von ≥ 0,9 aufweisen. Diese Robustheit ist für Kunstharz-Befestigungssysteme zur Erlangung einer hohen Performance (Leistungsfähigkeit) äußerst wichtig, da niedrigere Quotienten B7/R1 (größerer Unterschied zwischen trockenem und feuchtem Bohrloch) gemäß EAD330499-02-0601 Edition 04/2023 (nachfolgend auch "EAD" oder "EAD 330499-02-0601 genannt)) gemäß Table 2.2.5.6.1 zu *höheren* Abminderungsfaktoren führen und damit die für die spätere Bemessung zugrunde liegende Gesamtperformance des Kunstharz-Befestigungssystems erniedrigen. Erhöhung der Robustheit bedeutet dabei insbesondere einen höheren Quotienten B7/R1 gegenüber Zusammensetzungen mit PEG200DMA (hydrophile Referenz) und/oder BDDMA (hydrophobe Referenz).

Beispiele für erfindungsgemäße Reaktivverdünner sind solche Verbindungen, die durch Vorhandensein von mindestens einer oder mehreren Propylenglykol- bzw. Propylenoxid-Wiederholeinheiten gekennzeichnet sind, welche mindestens eine reaktive (Meth)Acrylat-gruppe direkt oder indirekt an den Enden aufweisen (also direkt oder indirekt "endgecappt" sind).

Hierbei handelt es sich insbesondere um solche Reaktivverdünner, die ausgewählt sind aus der Gruppe bestehend aus Propylenglykoldi(meth)acrylat, Dipropylenglykoldi(meth)acrylat, ferner Tripropylenglykoldi(meth)acrylat; ferner Tetrapropylenglykoldi(meth)acrylat und Block-Alkylenglykoldi(meth)acrylaten der Formel CYXYC in Form von mit (Meth)acrylat terminal veresterten ethoxylierten Propylenglykolen in einem zentralen Propylenoxidblock (X) mit 5 oder mehr (vorzugsweise bis 20) linear angeordneten 1,2-Propylenoxideinheiten, der an seinen beiden Enden mit unabhängig voneinander zwei oder mehr Ethylenoxideinheiten verlängert ist (Y), die an beiden Enden je eine (Meth)acryloylgruppe (C) tragen, oder ferner Mischungen von zwei oder mehr der genannten Reaktivverdünner.

Beispiele erfindungsgemäß vorzugsweise zu beinhaltender/einzusetzender Reaktivverdünner mit ausgewogener Polarität sind Dipropylenglykoldi(meth)acrylat oder ferner Tripropylenglykoldi(meth)acrylat, oder ferner Mischungen davon.

Andere Beispiele erfindungsgemäß vorzugsweise zu beinhaltender/einzusetzender Reaktivverdünner mit ausgewogener Polarität sind Block-Alkylenglykoldi(meth)acrylate, welche aus Propylen- und Ethylenglykol aufgebaut sind, nämlich solche der Formel CXYXC in Form von mit (Meth)acrylat terminal verestertem ethoxyliertem Propylenglykol mit zentralem Propylenoxidblock (X) mit 6 bis 15 linear angeordneten 1,2-Propylenoxideinheiten, der an beiden Enden mit zwei bis 4 Ethylenoxideinheiten verlängert ist (Y), die an beiden Enden je eine (Meth)acryloylgruppe (C) tragen, wie ethoxylierte PropylenglykolDi(meth)acrylate (z.B. Bisomer EP150DMA, Bisomer EP100DMA, oder Miramer M2053).

Auch Abmischungen ein oder mehrerer Reaktivverdünner ausgewählt aus zwei oder mehr von den zuvor genannten sind erfindungsgemäß zu beinhalten bzw. einzusetzen.

Ohne an diese Theorie gebunden sein zu wollen, kann die vorteilhafte Robustheit der Kunstharz-Befestigungssysteme, welche die erfindungsgemäßen Reaktivverdünner beinhalten, tatsächlich mit der ausgewogenen Polarität zusammenhängen: Hydrophile (wasserliebende) Kunstharz-Befestigungssysteme nehmen wohl das Wasser in einem wassergefüllten Bohrloch oder die Feuchtigkeit in einem feuchten Bohrloch bereitwillig auf, wodurch dieses aufgenommene Wasser/Feuchtigkeit in dem härtenden Befestigungssystem weichmachend wirkt. Dagegen können hydrophobe (wassermeidende) Kunstharz-Befestigungssystem, aufgrund der wasserabstoßenden Eigenschaft, in feuchten Bohrlöchern zu fehlender Benetzung und dadurch zu Adhäsionsproblemen führen. Die erfindungsgemäßen Reaktivverdünner mit ausgewogener Polarität können dagegen für eine ausreichende Benetzung gekoppelt mit einer guten Adhäsion und einer verringerten Wasser-/Feuchtigkeitsaufnahme sorgen, wodurch der weichmachende Effekt weniger stark ausgeprägt ist und eine gute Leistungsfähigkeit sowohl im trockenen als auch im feuchten Bohrloch erreicht werden kann.

Im Einzelnen betrifft die Erfindung daher vor allem folgende Erfindungsgegenstände (Erfindungsverkörperungen oder Ausführungsformen der Erfindung):
In einer ersten Ausführungsform betrifft die Erfindung daher (ein- oder insbesondere mehrkomponentige) radikalisch härtbare Kunstharz-Befestigungssysteme, welche ein oder mehrere Reaktivverdünner ausgewählt aus solchen, welche ein oder mehrere Reaktivverdünner, die durch Vorhandensein von einer oder mehreren Propylenglykol- bzw. Propylenoxid-Wiederholeinheiten gekennzeichnet sind, welche mindestens eine reaktive (Meth)Acrylatgruppe direkt oder indirekt an den Enden aufweisen, und welche ausgewählt sind aus der Gruppe bestehend aus Propylenglykoldi(meth)acrylat, Dipropylenglykoldi(meth)acrylat, ferner Tripropylenglykoldi(meth)acrylat; ferner Tetrapropylenglykoldi(meth)acrylat und Block-Alkylenglykoldi(meth)acrylaten der Formel CYXYC in Form von mit (Meth)acrylat terminal veresterten ethoxylierten Propylenglykolen in einem zentralen Propylenoxidblock (X) mit 5 oder mehr (vorzugsweise bis 20) linear angeordneten 1,2-Propylenoxideinheiten, der an beiden Enden mit unabhängig voneinander zwei oder mehr Ethylenoxideinheiten verlängert ist (Y), die an beiden Enden je eine (Meth)acryloylgruppe (C) tragen, oder ferner Mischungen von zwei oder mehr der genannten Reaktivverdünner, beinhalten; wobei insbesondere der oder die genannten Reaktivverdünner in einer radikalisch härtbaren Reaktivharzkomponente (A) in einem mehr-, in erster Linie zweikomponentigen radikalisch härtbaren Kunstharz-Befestigungssystem mit einer radikalisch härtbaren Reaktivharzkomponente (A) und einer Härterkompontente (B) beinhaltet ist oder sind.

Eine bevorzugte Ausführungsform sind solche radikalisch härtbare Kunstharz-Befestigungssysteme gemäß dem vorstehenden Absatz, worin der oder die Reaktivverdünner aus Propylenglykoldi(meth)acrylat, Dipropylenglykoldi(meth)acrylat, ferner Tripropylenglykoldi(meth)-acrylat oder Tetrapropylenglykoldi(meth)acrylat, und weiteren höheren Homologen und Block-Alkylenglykoldi(meth)acrylaten, welche aus Propylen- und Ethylenglykol aufgebaut sind, nämlich solchen der Formel CXYXC in Form von mit (Meth)acrylat terminal verestertem ethoxyliertem Propylenglykol mit zentralem Propylenoxidblock (X) mit 6 bis 15 linear angeordneten 1,2-Propylenoxideinheiten, der an beiden Enden mit zwei bis 4 Ethylenoxideinheiten verlängert ist (Y), die an beiden Enden je eine (Meth)acryloylgruppe (C) tragen, (z.B. Bisomer EP150DMA, Bisomer EP100DMA, oder Miramer M2053), ausgewählt sind, oder Mischungen von zwei oder mehr davon. Die jeweiligen Methacrylate sind bevorzugt.

Bevorzugt sind jeweils Ausführungsformen der Erfindung, die nur einen (1) einzigen der dort genannten erfindungsgemäßen Reaktivverdünner beinhaltet und vorzugsweise keinen weiteren Reaktivverdünner.

Bevorzugt sind solche radikalisch härtbaren Kunstharz-Befestigungssysteme zur Verbesserung der Leistungsfähigkeit in schlecht gereinigten und/oder feuchten Bohrlöchern in mineralischen Untergründen, dadurch gekennzeichnet, dass sie einen möglichst hohen Quotienten B7/R1 aus ermittelter Verbundspannung im feuchten und schlecht gereinigten Bohrloch B7 zu Verbundspannung in trockenem, gut gereinigten Bohrloch R1, aufweisen, insbesondere einen Quotienten B7/R1 von ≥ 0,80 vorzugsweise von ≥ 0,89, vorzugsweise ≥ 0.90, wobei B7/R1 gemäß EAD330499-02-0601 Edition 04/2023 (EAD) bestimmbar oder vorzugsweise bestimmt ist. Die Obergrenze liegt definitionsgemäß vorzugsweise bei 1.

In einer zweiten Ausführungsform betrifft die Erfindung die Verwendung eines wie vor- und nachstehend definierten Kunstharz-Befestigungssystems als Klebemittel in der Befestigungstechnik, insbesondere zur Befestigung von Verankerungsmitteln in Bohrlöchern oder Spalten, vor allem in einem Bausubstrat.

Eine dritte Erfindungsverkörperung betrifft ein Verfahren zur Herstellung der vor- und nachstehend definierten Kunstharz-Befestigungssysteme, dadurch gekennzeichnet, dass den übrigen Bestandteilen, insbesondere einer Reaktivharz-Komponente bei einem Mehrkomponentensystem, Reaktivverdünner wie vor- und nachstehend definiert zugemischt werden und insbesondere, im Falle von Mehrkomponentensystemen in separaten Kompartimenten, in Verpackungen abgefüllt werden.

Eine vierte Erfindungsverkörperung betrifft ein Verfahren zur Befestigung von beispielsweise Verankerungsmitteln in Bohrlöchern oder Spalten unter Verwendung eines der vor- und nachstehend definierten Kunstharz-Befestigungssysteme, das oder die mindestens einen der erfindungsgemäß zu verwendenden radikalisch härtbaren Reaktivverdünner beinhalten.

Auch die Reaktivverdünner zur Anwendung in erfindungsgemäßen Kunstharz-Befestigungssystemen bzw. deren Verwendung in einem solchen bilden einen Erfindungsgegenstand.

Ein weiterer Erfindungsgegenstand betrifft eine Reaktivharzkomponente für ein erfindungsgemäßes Kunstharz-Befestigungssystem als solche, welche ein radikalisch härtbares Reaktivharz und einen oder mehrere der genannten erfindungsgemäß verwendbaren Reaktivverdünner beinhaltet.

Weitere Erfindungsgegenstände gehen aus den Ansprüchen hervor, die hier durch Bezugnahme inkorporiert werden, wobei Unteransprüche gegenüber den jeweils in Bezug genommenen Ansprüchen bevorzugte Ausführungsformen der Erfindung bedeuten.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was jeweils besondere Ausführungsformen der Erfindung darstellt.

"Radikalisch härtbare (im Reaktiv(-Kunst)harzanteil ungesättigte Bindungen, insbesondere olefinische Doppelbindungen aufweisende) Kunstharz-Befestigungssysteme" bedeutet insbesondere, dass die erfindungsgemäßen Kunstharz-Befestigungssysteme auf Reaktiv-Kunstharzen (hierin auch als Reaktivharze bezeichnet) basieren, dabei jedoch neben den bisher und nachfolgend genannten Bestandteilen auch weitere übliche Inhaltsstoffe (Bestandteile; z.B. Füllstoffe, Additive oder andere oben oder unten genannte Bestandteile) beinhalten können. Diese weiteren Inhaltsstoffe können beispielsweise in einem Massenanteil von insgesamt bis zu 80, vorzugsweise zwischen 0,01 und 65 %, vorliegen. Auch "basierend auf" steht, bedeutet insbesondere, dass der betreffende Bestandteil mehr als 50, vorzugsweise mehr als 60, wie mehr als 70 % bis zu jeweils 100 % (Massenanteil bezogen auf den jeweiligen Bestandteil, z.B. "Kunstharzkomponente" oder "Härterkomponente") der nach "auf Basis von" genannten Stoffe enthält.

Vor- und nachstehend bedeuten Anteils- oder Gehaltsangaben in Prozent jeweils Massenanteile in Prozent, angegeben als %, vorzugsweise angebbar als Gew.-%, soweit nicht anders angegeben. Wo keine anderen Angaben gemacht werden, beziehen sich die Anteilsangaben auf die Gesamtmasse der Bestandteile eines mehrkomponentigen Kunstharzsystems außer der Verpackung (wie ohne Material der Hüllen von Folien, ohne (z.B. Glas-)Wände von Glaspatronen, ohne Material der Hülle von Kunststoffbehältern oder Kartuschen (dort auch ohne Statikmischer) und dergleichen).

Der Massenanteil der erfindungsgemäßen bzw. erfindungsgemäß zu verwendenden Reaktivverdünner bei einem erfindungsgemäßen bzw. erfindungsgemäß zu verwendenden Kunstharz-Befestigungssystem liegt vorzugsweise im Bereich von 0,1 bis 50 %, insbesondere von 0,5 bis 40 %, besonders bevorzugt bei 1 bis 25 %. Bezogen auf eine Reaktivharzkomponente und nur den Reaktivharzanteil und die Menge des Reaktivverdünners liegt alternativ der Massenanteil vorzugsweise im Bereich von 0,5 bis 60 %, insbesondere von 1 bis 50 %, insbesondere von 2 bis 30 %.

"Beinhalten(d)" oder "umfassen(d)" oder "enthalten(d)" bedeutet, dass neben den genannten Komponenten oder Merkmalen noch andere vorhanden sein können, steht also für eine nicht abschließende Aufzählung, im Gegensatz zu "bestehen(d) aus", dass für eine abschließende Aufzählung der bei seiner Verwendung aufgezählten Komponenten oder Merkmale steht.

"Bausubstrate" sind insbesondere Beton oder Mauerwerk (auch aus Ziegelstein), insbesondere Beton, aber auch aus Holz.

Unter einem Loch oder Spalt ist insbesondere ein Bohrloch zu verstehen. Dieses kann gereinigt (z.B. durch ein- oder mehrmaliges Ausblasen und/oder Bürsten) oder ungereinigt der erfindungsgemäßen Verwendung bzw. dem erfindungsgemäßen Verfahren zugeführt werden, oder wie sonst dargelegt.

Unter Verankerungselementen sind insbesondere solche aus Metall, z.B. Hinterschneidanker, Gewindestangen, Schrauben, Bohranker, Bolzen, oder ferner einem anderen Material, wie Verbundmaterial, Kunststoff oder Holz, zu verstehen.

Wo das Attribut "ferner" erwähnt wird, bedeutet dies, dass Merkmale ohne dieses Attribut stärker bevorzugt sein können.

"Ein(e)" bedeutet in erster Linie den unbestimmten Artikel (entsprechend insbesondere "ein (1) oder mehrere" oder "mindestens ein(e) (1)"), außer wo der Kontext die Verwendung als Zahlwort erfordert. Wo der Plural angegeben ist, beinhaltet das auch den Singular.

"Und/oder" bedeutet, dass die genannten Merkmale/Substanzen jeweils alleine oder in Kombination von zwei oder mehr (bis hin zu allen) der jeweils genannten Merkmale/Substanzen vorliegen können.

"Etwa" bedeutet insbesondere, dass ein damit gekennzeichneter Zahlenwert um ± 10 %, vorzugsweise um ± 5 %, vom genannten Wert abweichen kann, beispielsweise um ± 2 %. "Etwa" kann für bevorzugte Ausführungsformen der Erfindung gestrichen werden.

(Meth)acryl bzw. "(meth)acryl) steht für Acryl, Methacryl oder Acryl und Methacryl (als Gemisch). "Methacryl" bzw. "methacryl" kennzeichnet bevorzugte Verbindungen.

Radikalisch härtbar bedeutet in der vorliegenden Offenbarung dasselbe wie radikalisch polymerisierbar.

Unter radikalisch härtenden (= ungesättigten) Reaktiv(-Kunst)harzen sind in erster Linie solche zu verstehen, die als radikalisch aushärtende (was "(z.B. vor Härterzugabe) aushärtbar einschließt) Komponenten organische Verbindungen mit ungesättigten (z.B. olefinischen) Resten beinhalten oder insbesondere daraus bestehen, insbesondere solche, die härtbare Ester mit ungesättigten Carbonsäureresten umfassen; z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate oder (vorzugsweise jeweils propoxyliertem oder insbesondere ethoxyliertem) aromatischem Diol-, wie Bisphenol-A-, Bisphenol-F- oder Novolak-(insbesondere di-) (meth)acrylat), Epoxy(meth)acrylate (insbesondere in Form von Umsetzungsprodukten von Di- oder Polyepoxiden, z.B. Bisphenol-A-, Bisphenol-F- oder Novolak-di- und/ oder-poly-glycidylethern, mit ungesättigten Carbonsäuren, z.B. C₂-C₇-Alkencarbonsäuren, wie insbesondere (Meth)acrylsäure), Urethan- und/oder Harnstoff(meth)acrylate (was, wie dem Fachmann bekannt, auch vorverlängerte und/oder oligomere Urethan- und/oder Harnstoff(meth)acrylate umfasst), und/oder ungesättigte Polyesterharze, oder dergleichen; oder ein Gemisch von zwei oder mehr dieser härtbaren ungesättigten organischen Komponenten.

Beispiele für in besonderen Ausführungsformen der Erfindung vorhandene bzw. verwendete Epoxy(meth)acrylate sind solche der Formel (I) 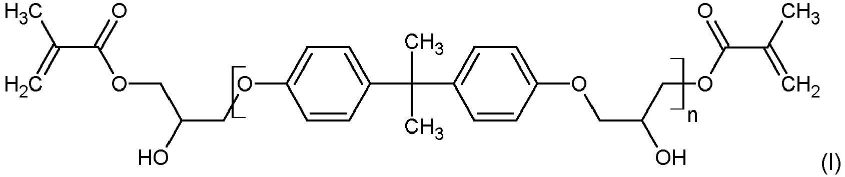 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich).

Beispiele für in besonderen Ausführungsformen der Erfindung nützliche propoxylierte oder insbesondere ethoxylierte aromatische Diol-, wie Bisphenol-A-, Bisphenol-F- oder Novolak-(insbesondere di-)(meth)acrylate sind solche der Formel (II) 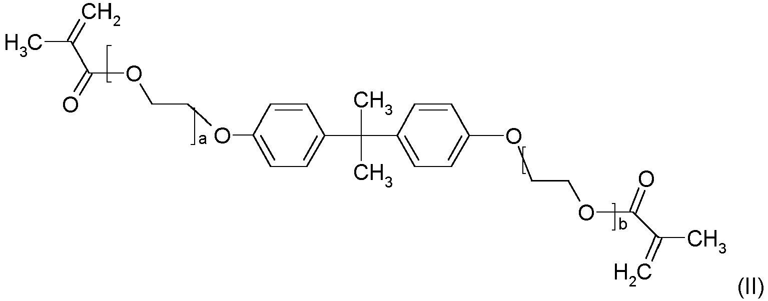 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich), wobei im Falle der propoxylierten Verbindungen jeweils anstelle der Gruppe [-O-CH₂-CH₂]ₐ und/oder [-O-CH₂-CH₂]_{b} eine Anzahl "a" und/oder "b" an unverzweigten oder vorzugsweise verzweigten Oxypropylengruppen vorliegt.

Beispiele für in besonderen Ausführungsformen der Erfindung vorhandene bzw. verwendete Urethan(meth)acrylate sind solche, die einerseits aus der Umsetzung eines vorverlängerten Di- oder Polyisocyanats und/oder andererseits aus der direkten Umsetzung eines Di- oder Polyisocyanats (z.B.: PMDI, und/oder MDI) mit Hydroxyethyl- oder Hydroxypropyl(meth)-acrylat resultieren. Das Di- oder Polyisocyanat kann jeweils monomerer, oligomerer und/oder polymerer Struktur sein. Die Art und Weise zur Durchführung von Vorverlängerungsreaktionen und die Vielzahl der Vorverlängerungsreaktionsmöglichkeiten sind dem Fachmann bekannt und werden hier nicht explizit beschrieben. Es sei hier beispielhaft auf die Anmeldungen EP 0508183 A1, EP 0432087 A1 und insbesondere WO 2019/197190 A1 verwiesen.

Vorzugsweise ist als einziges radikalisch härtbares Kunstharz (Reaktivharz) ein Epoxy(meth)acrylat; stärker bevorzugt ein Urethan(meth)acrylat oder insbesondere ein alkoxyliertes, aromatisches (Meth)acrylat der Formel (II), wie jeweils vorstehend beschrieben, vorhanden. Die jeweiligen Methacrylate sind bevorzugt.

Das oder die Reaktivharze sind vorzugsweise in einem Massenanteil von 2 bis 80 %, insbesondere von 5 bis 50 %, in erster Linie von 10 bis 40 %, beinhaltet.

Die erfindungsgemäßen (was immer auch alternativ für "erfindungsgemäß zu verwendenden" steht) Kunstharz-Befestigungssysteme können neben den bisher genannten Bestandteilen auch weitere übliche Bestandteile (z.B. Additive oder andere oben oder unten genannte Bestandteile) beinhalten, in einer oder der Kunstharzkomponente und/oder einer oder der Härterkomponente. Diese weiteren Bestandteile können beispielsweise in einem Massenanteil von insgesamt bis zu 80, vorzugsweise zwischen 0,01 und 65 %, vorliegen. Auch wo nicht ausdrücklich "auf Basis" erwähnt wird, sind derartige übliche Bestandteile möglich.

Beispiele für weitere ("übliche") Inhaltsstoffe (Zusätze, Bestandteile) von Reaktivharzen in erfindungsgemäßen oder erfindungsgemäß verwendeten Kunstharz-Befestigungssystemen sind hier metallsalzbasierte oder vorzugsweise aminische Beschleuniger, Inhibitoren, nicht reaktive Verdünner, reaktive Verdünner, Thixotropiermittel, Füllstoffe und/oder weitere Additive, oder Mischungen von zwei oder mehr dieser Inhaltsstoffe.

Als aminische Beschleuniger kommen solche mit hinreichend hoher Aktivität in Frage, wie insbesondere tertiäre aromatische Amine, insbesondere hydroxyalkylaminogruppensubstituierte aromatische Verbindungen ausgewählt aus der Gruppe, die aus epoxyalkylierten Anilinen, Toluidinen oder Xylidinen, wie z.B. ethoxyliertem oder propoxyliertem Toluidin, Anilin oder Xylidin, beispielsweise N,N-bis(hydroxypropyl- oder hydroxyethyl)-toluidinen oder Dipropoxy-p-toluidin oder -xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Massenanteil (Konzentration) von 0,005 bis 10, insbesondere von 0,1 bis %.

Als Inhibitoren können beispielsweise nichtphenolische (anaerobe) und/oder phenolische Inhibitoren zugesetzt werden.

Als phenolische Inhibitoren oder Stabilisatoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon; (nichtalkylierte oder alkylierte) Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 2,2'-Methylen-di-p-cresol, 4,4'-Methylen-bis(2,6-di-tert-butylphenol), 1,3,5-Trimethyl-2,4,6-tris(3,5-di-tert-butyl-4-hydroxy¬benzyl)-benzol, 6-tert-butyl-2,4-xylenol, 2,6-Di-tert-butyl-p-cresol; (nichtalkylierte oder alkylierte) Catechole (Brenzcatechine) wie Brenzcatechin, 4-tert-Butylbrenzcatechin und 4,6-Di-tert-butylbrenzcatechin, 3,5-Di-tert-butyl-1,2-benzoldiol, oder Gemische von zwei oder mehr davon, in Frage. Diese haben vorzugsweise einen Massenanteil von bis zu 1 %, insbesondere falls vorhanden zwischen 0,0001 und 0,5 %, z.B. zwischen 0,01 und 0,1 %.

Als nicht-phenolische oder anaerobe (d.h. im Gegensatz zu den phenolischen Inhibitoren auch ohne Sauerstoff wirksame) Inhibitoren oder Stabilisatoren kommen vorzugsweise Phenothiazin oder organische Nitroxylradikale in Betracht. Als organische Nitroxylradikale können HALS-Stabilisatoren wie beschrieben in "Polyurethane, Kunststoff Handbuch", Kapitel 3.4.8 Alterungsschutzmittel, S. 121, 3. Auflage, 1993, hrsg. Gerhard W. Becker und Dietrich Braun, Carl Hanser Verlag München Wien beinhaltet sein, wie insbesondere 1-oxyl-2,2,6,6-tetramethylpiperidin-4-ol ("4-OH-TEMPO"), 1-Oxyl-2,2,6,6-tetramethylpiperidin, 1-Oxyl-2,2,6,6-tetramethylpiperidin-4-on, 1-Oxyl-2,2,6,6-tetramethyl-4-carboxyl-piperidin, 1-Oxyl-2,2,5,5-tetramethylpyrrolidin, 1-Oxyl-2,2,5,5-tetramethyl-3-carboxylpyrrolidin, oder sterisch gehinderte Amine, wie (4,4'-Di-octyl-diphenylamin), oder beispielsweise solche, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetramethylpiperidin-4-ol ("4-OH-TEMPO" oder "TEMPOL"). Der Gewichtsanteil der nicht-phenolischen Inhibitoren liegt (falls vorhanden) vorzugsweise, bezogen auf die Reaktionsharzformulierung, im Bereich von 1 ppm (massenbezogen) bis 2 %, insbesondere z.B. im Bereich von 5 ppm bis 1 %.

Als nicht reaktive Verdünner können beispielsweise Pflanzenöle, wie Rizinusöl, oder ferner Bioalkohole und Fettsäuren und deren Ester zugesetzt werden, oder Gemische von zwei oder mehr davon, beispielsweise in einem Anteil von 3 bis 60 %, z.B. von 4 bis 55 %.

Als Thixotropiermittel können übliche thixotropieverursachende Rheologiehilfsmittel verwendet werden, wie pyrogene Kieselsäure oder (z.B. mit Silanen) oberflächenbehandelte Kieselsäure. Sie können z.B. in einem Gewichtsanteil von 0,01 bis 50 %, beispielsweise von 0,5 bis 20 %, zugesetzt werden.

Als Füllstoffe können übliche Füllstoffe , beispielsweise mit gröberen und/oder feinteiligeren Partikelgrößen, insbesondere Kreiden, Gips, Branntkalk, Sand, wie Quarzsand, Quarzmehl, Korund, Glas (auch als Hohlkugeln), Porzellan, Keramik, Silikate, Tone oder Schwerspat, die als Pulver in körniger Form oder in Form von Formkörpern zugesetzt sein können, beinhaltet sein, oder andere, wie Kern- oder Schalenmehle aus Pflanzen oder Stärke und deren Derivate, was den biogenen Kohlenstoffanteil erhöht, wie Olivenkernmehl, Kokosnussschalenmehl oder ferner Walnussschalenmehl, oder Gemische von zwei oder mehr davon, wobei die Füllstoffe ferner oder insbesondere auch silanisiert sein können. Die Füllstoffe können in einer oder in mehreren Komponenten eines erfindungsgemäßen mehrkomponentigen Kunstharz-Befestigungssystem, beispielsweise einer oder beiden Komponenten eines entsprechenden Zweikomponentenkits, vorhanden sein; der Massenanteil an Füllstoffen beträgt vorzugsweise 0 bis 90 %, insbesondere 5 bis 80 %, beispielsweise 10 bis 50 % oder 40 bis 70 % (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann). Zusätzlich oder alternativ zu ein oder mehreren der genannten Füllstoffe können ferner hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Um den CO2-Fußabdruck bzw. die CO2-Bilanz des Kunstharz-Befestigungssystems zu verbessern, können als Füllstoffe auch pulverisierte Recyclingmaterialien aus Abfallprodukten eingesetzt werden. Vorzugsweise ist ein entsprechender Recyclingfüllstoff ausgewählt aus der Gruppe bestehend aus Beton, Ziegelsteinen, Kalksandsteinen, Natursteinen, Flugasche, Gummi, Altplastik, Altglas und evtl. bei der Aufbereitung des Recyclingfüllstoffs anwesenden ausgehärteten chemischen Kunstharz-Befestigungssystems.

Auch weitere Additive können zugesetzt sein, wie nicht reaktive Verdünnungsmittel, Flexibilisatoren, Stabilisatoren, Rheologiehilfsmittel wie Bentonite, Alkyl- wie Methylcellulosen, Rhizinusölderivate oder dergleichen, Weichmacher, wie Phthalsäure- und Sebacinsäureester, Antistatikmittel, Flexibilisatoren, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder ferner Weichmacher, oder Gemische von zwei oder mehr davon. Darüber hinaus können auch Mittel zur Verbesserung der Verträglichkeit zwischen Harz- und Härterkomponente, wie ionische, nicht ionische oder amphotere Tenside, Seifen, Netzmittel, Detergenzien, Polyalkylenglykolether, Salze von Fettsäuren, Mono- oder Diglyceride von Fettsäuren, Zuckerglyceride, Lecithin, Alkansulfonate, Alkylbenzolsulfonate, Fettalkoholsulfate, Fettalkoholpolyglykolether, Fettalkoholethersulfate, sulfonierte Fettsäuremethylester, Fettalkoholcarboxylate, Alkylpolyglykoside, Sorbitanester, N-Methylglucamide, Saccharoseester, Alkylphenole, Alkylphenolpolyglykolether, Alkylphenolcarboxylate, quartäre Ammoniumverbindungen, Esterquats, Carboxylate quartärer Ammoniumverbindungen, verwendet werden. Derartige weitere Zusätze können vorzugsweise insgesamt in Massenanteilen von insgesamt 0 bis 90 %, beispielsweise von 0 bis 40 %, zugesetzt sein.

Neben den erfindungsgemäß beinhalteten Reaktivverdünnern können ein oder mehrere weitere "reaktive Verdünner" beinhaltet sein.

Als "reaktive Verdünner" (so benannt zur Unterscheidung von den zur Erfindungsdefinition genannten "Reaktivverdünnern") können ferner ein oder mehrere radikalisch härtende ungesättigte reaktive Verdünner in biogener oder nicht-biogener Form zusätzlich zu den erfindungsgemäß beinhalteten Reaktivverdünnern zugesetzt sein, worunter in erster Linie solche zu verstehen sind, die als radikalisch aushärtende (was "(z.B. vor Härterzugabe) aushärtbar" einschließt) Komponenten organische Verbindungen mit ungesättigten (z.B. olefinischen) Resten beinhalten oder insbesondere aus solchen Verbindungen bestehen, z.B. insbesondere (Meth)Acrylat-oder (Meth)-Acrylamid-Monomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)acrylate (einschließlich Hydroxyniederalkyl(meth)acrylaten, die auch aus der erfindungsgemäßen U(M)A-Harzherstellung bereits bei Überschuss als Reaktivverdünner beinhaltet sein können, wie Hydroxypropyl(meth)acrylat oder Hydroxy-ethyl(meth)acrylat; Alkylenglykoldi(meth)acrylate, wie Diethylenglykol-di(meth)acrylat, Triethylenglykoldimethacrylat, Tetraethylenglykoldimethacrylat; Methoxypolyethylenglykol-mono(meth)acrylat, wie Methoxypolyethylenglykol-350- oder -500-Methacrylat (MPEG350 oder 500MA, Mittelwert n ≈ 8 oder 11, oder höhere Homologe; Polypropylenglykol-mono(meth)acrylat mit einem Mittelwert n ≈ 4 - 5; Oligoethylenglykoldi(meth)acrylate, wie Polyethylenglykol-200-Dimethacrylat (PEG200DMA, Mittelwert n ≈ 4), Polyethylenglykol-400-Dimethacrylat (PEG400DMA, Mittelwert n ≈ 9) oder wie in WO 2016/000807 A1 oder EP 4 056 607 beschrieben, die hier durch Bezugnahme aufgenommen werden; aliphatische oder aromatische Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi(meth)acrylat, 1,3-Propandioldi-(meth)acrylat, Butandioldi(meth)acrylat, wie 1,3- oder insbesondere 1,4-Butandioldi(meth)-acrylat, Hexandioldi(meth)acrylat, 1,10-Decandioldi(meth)acrylat, 2-Ethylhexyl(meth)acrylat, Acetoacetoxyethyl(meth)acrylat, Methoxyethyl(meth)acrylat, tert-Butyl(meth)acrylat, 2-Methacryloyloxyethylphosphat, Trimethylolpropantri(meth)acrylat, Glycerintri(meth)acrylat, Polyglycerinpoly(meth)acrylat, das Umsetzungsprodukt der Acylierung von Glycerinformal (einer bei Raumtemperatur flüssigen Gleichgewichtsmischung von 5-Hydroxy-1,3-dioxan und 4-Hydroxymethyl-1,3-dioxolan) mit Methacrylsäure oder deren reaktiven Derivaten (bekannt als GLYFOMA von Evonik), Benzyl(meth)acrylat, 2-Phenoxyethyl(meth)acrylat; Heteroalkyl-(meth)acrylate, wie 2-Dimethylaminoethyl(meth)acrylat, N,N-Dimethylaminomethyl(meth)-acrylat, 3-Dimethylaminopropyl(meth)acrylamid; Cycloalkyl-, Bicycloalkyl- oder Heterocyclyl-(meth)acrylate, worin Cycloalkyl oder Bicycloalkyl ferner substituiert sein kann und 5 bis 7 Ringkohlenstoffatome aufweist und Heterocyclyl 5 oder 6 Ringatome hat, ferner Substituenten tragen kann und 1 oder 2 Ringheteroatome ausgewählt aus N, O und S aufweist, wie Tetrahydrofurfuryl(meth)acrylat, Trimethylcyclohexyl(meth)acrylat, Dicyclopentenyloxyethyl-(meth)acrylat, Tricyclopentadienyldi(meth)acrylat, Solketal(meth)acrylat, Cyclohexyl(meth)-acrylat, Norbornyl(meth)acrylat, Isosorbidmono- und/oder -di(meth)acrylat oder Isobornyl-(meth)acrylat; oder ferner Styrole, wie Styrol, α-Methylstyrol, Vinyltoluol, tert.-Butylstyrol und/oder Divinylbenzol; oder Gemische von zwei oder mehr davon, beispielsweise (falls vorhanden) in einem Masseanteil von 0,1 bis 90 %, z.B. zwischen 10 und 80 %, 30 bis 70 % oder 40 bis 60 %, hier jeweils bezogen auf das Gesamtgewicht der Mischung aus Reaktiv-Kunstharz und Reaktivverdünner ohne Füllstoffe, aber, soweit vorhanden, mit anderen Zusätzen. Vorzugsweise sind jedoch außer dem oder den erfindungsgemäß vorhandenen bzw. eingesetzten Reaktivverdünner keine weiteren "reaktiven Verdünner" vorhanden.

Bevorzugt kann die Kunstharz- bzw. die Reaktivharzkomponente zusätzlich einen Haftvermittler enthalten. Der Haftvermittler verbessert die Vernetzung zwischen Bohrlochwand und des Kunstharz-Befestigungssystems und sorgt hiermit für eine erhöhte Haftung im ausgehärteten Zustand. Daraus resultiert eine erhöhte Versagensverbundspannung, welche für die Verwendung des Kunstharz-Befestigungssystems von großer Bedeutung ist. Geeignete Haftvermittler sind vorzugsweise aus der Gruppe der Silane und/oder Siloxane, die mit weiteren reaktiven organischen Gruppen funktionalisiert sind und in das Polymernetzwerk eingebunden werden können, ausgewählt. Diese Gruppe umfasst z.B. 3-(Meth)-acryloyloxypropyltrimethoxysilan, 3-(Meth)acryloyloxypropyltriethoxysilan, 3-(Meth)acryloyloxymethyltrimethoxysilan, 3-(Meth)acryloyloxymethyltriethoxysilan, Vinyltrimethoxysilan, Vinyltriethoxysilan, Tetraethoxysilan, Tetramethoxysilan, Tetrapropoxysilan, funktionalisiertes Ethyl- oder Propylpolysilikat und Gemische von zwei oder mehr davon. In dieser Hinsicht wird Bezug genommen auf die Anmeldung DE 10 2009 059210, deren diesbezüglicher Inhalt hiermit in diese Anmeldung aufgenommen wird. Derartige Haftvermittler können vorzugsweise insgesamt in Massenanteilen von insgesamt 0 bis 15 %, beispielsweise von 1 bis 10 %, zugesetzt sein.

In der Härterkomponente finden als Initiator für die Härtung der erfindungsgemäßen Kunstharz-Befestigungssysteme im Falle der radikalischen Polymerisation beispielsweise radikalbildende Peroxide, z.B. organische Peroxide, wie Persäuren, beispielsweise Diacylperoxide, z.B. Dibenzoylperoxid, Alkylhydroxyperoxide, Dialkyperoxide, Aldehydperoxide, Peracetale, Perketale, Ketonperoxide, wie Methylethylketonperoxid oder Cyclohexanonperoxid, Peroxycarbonate, oder Alkylperester, wie tert-Butylperbenzoat, anorganische Peroxide, Persulfate oder Perborate, Azide, Azoverbindungen (wie AIBN), Tetraazene, ferner für ATRP typische halogenhaltige Initiatoren, oder Mischungen davon Verwendung.

Alternativ können für die Härtung Härterkomponenten mit anderen radikalischen Härtersystemen verwendet werden, die auch ohne die im voranstehenden Absatz genannten "Per-"Verbindungen auskommen können oder parallel mit solchen "klassischen" Radikalbildnern eingesetzt werden können.

Beispielsweise kann für die Härtung der erfindungsgemäßen Kunstharz-Befestigungssysteme ein Härtersystem verwendet werden, welches die Bestandteile:
a) mindestens einen Aktivator in Form eines Metallsalzes
b) als Radikalkettenstarter mindestens eine Thiol- und/oder Thiolester-Gruppen beinhaltende Verbindung,
beinhaltet. Durch die Kombination bzw. das Mischen der beiden Bestandteile können Radikale gebildet werden, welche anstelle von bisher üblichen Radikalbildnern eine Polymerisation von nichtaromatischen Doppelbindungen, z.B. olefinischen Doppelbindungen, beispielsweise Acrylaten oder Methacrylaten, auslösen können. Es sei hier auf die Patentanmeldung WO 2015/090523 A1 verwiesen, die hier diesbezüglich durch Bezugnahme aufgenommen wird.

Beispiele für Thiole sind Thioglycerin, Methyl-, Ethylmercaptan und höhere Homologe z.B. Dodecylmercaptan; Dimercaptane, wie Dimercaptopropansulfonsäure, Dimercaptobernsteinsäure, Dithiothreitol; Poly(ethylenglykol)dithiole, der allgemeinen Formel HS-[CH₂-CH₂-O]ₙ-CH₂-CH₂-SH, worin n für eine Zahl zwischen 0 bis 10 steht; flüssige Polysulfidpolymere mit Thiol-Endgruppen z.B. Thioplast G Typen der Firma Akzo Nobel; Polymercaptanhärter und -vernetzer z.B. SIQ-Amin 999 der Firma S.I.Q.-Kunstharze GmbH; ethoxylierte und/oder propoxylierte Alkohole aus Mono-, Di-, Tri-, Tetra-, Pentaolen und/oder anderen Polyolen mit Thiolendgruppen z.B. Capcure 3-800 der Firma Cognis, oder die nachfolgend als insbesondere geeigneten Thiole genannten Verbindungen. Als besonders geeigneter Thiolester sei hier der Octanthiolsäure- S-[3(triethoxysilyl)propyl]ester erwähnt. Beispiele für insbesondere geeignete Thiole sind Glykoldi(3-mercaptopropionat), Trimethylolpropantri(3-mercaptopropionat), Pentaerythritoltetra(3-mercaptopropionat), Dipentaerythritolhexa-3-mercaptopropionat, ethoxyliertes Trimethylolpropan-tris(3-mercaptopropionat) mit unterschiedlichen Ethoxylierungsgraden (z.B. ETTMP 700 und ETTMP 1300 der Firma Bruno Bock), Tris[2-(3-mercaptopropionyloxy)ethyl]isocyanurat, 3-Mercaptopropyltrimethoxysilan.

Ebenfalls alternativ kann für die Härtung der erfindungsgemäßen Kunstharz-Befestigungssysteme ein Härtersystem verwendet werden, welches die folgenden Bestandteile beinhaltet:
a) mindestens einen Aktivator in Form eines Metallsalzes und
b) als Radikalkettenstarter mindestens eine CH-acide Verbindung insbesondere der Formel A, 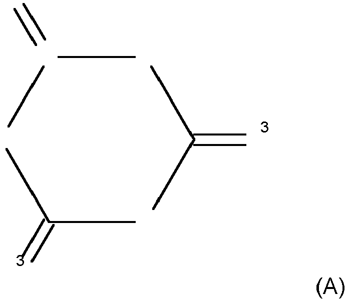 worin
   (i)
      - A- für -C(R¹)(R²)- steht
      - X- für eine Bindung, für -NR³- oder für -(CR⁴R⁵)ₚ- steht, oder für -O- steht,

      Y für NR⁶ oder für (CR⁷R⁸)_{q} steht, oder für O steht,
      wobei wenn X für O steht auch Y für O steht;
      wobei vorzugsweise X für (CR⁴R⁵)ₚ steht und Y für CR⁷R⁸ steht,
      oder X für NR³ und Y für NR⁶ steht;
      Z¹ für O, S, S=O oder S(=O)₂ steht,
      Z² für O, S, S=O oder S(=O)₂ steht,
      Z³ für O, S, S=O oder S(=O)₂ oder für R9 und R10 steht,
      p für 1, 2 oder 3 steht, vorzugsweise für 1 oder 2
      q für 1, 2 oder 3 steht, vorzugsweise für 1;
      und die Reste R¹, R², R³, R⁴, R⁵, R⁶, R⁷ R⁸, R⁹ und R¹⁰ unabhängig voneinander für Wasserstoff, Alkyl, Aryl, Aralkyl, Cycloalkyl oder Cycloalkylalkyl stehen und jeweils unsubstituiert oder substituiert sind und/oder Heteroatome (anstelle von C-Atomen;
      vorzugsweise ausgewählt aus O, N, wie NH oder N-Alkyl, und S) aufweisen, mit der Maßgabe, dass mindestens einer der Reste R¹ und R² Wasserstoff bedeutet,
         oder
   (ii) offenkettige Verbindungen,
      worin das die Brücke bildende Glied -C(=Z³)- fehlt,
      - A- für -C(R¹)(R²)- steht, X und Y unabhängig voneinander für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder vorzugsweise für eine jeweils unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkoxycarbonylmethylgruppe oder C₁₋C₄-Alkylcarbonylmethylgruppe stehen,

      R¹ und R² beide Wasserstoff bedeuten und
      Z¹ und Z² die genannten Bedeutungen haben;
      oder X für eine jeweils unverzweigte oder verzweigte, unsubstituierte oder substituierte, gegebenenfalls Heteroatome (anstelle von C-Atomen; insbesondere ausgewählt aus O, N, wie NH oder N-Alkyl, und S) aufweisende C₁-C₄-Alkylgruppe oder C₁-C₄-Alkoxygruppe oder C₁-C₄-Alkoxycarbonylmethylgruppe oder C₁-C₄-Alkylcarbonylmethylgruppe steht,
      Y und Z² gemeinsam mit dem bindenden Kohlenstoffatom -CN bedeuten,
      Z¹ die oben genannten Bedeutungen hat, und
R¹ und R² jeweils wie oben definiert sind mit der Maßgabe, dass mindestens einer der Reste Wasserstoff bedeutet; und/oder Salze davon.

Bevorzugte Beispiele für solche Verbindungen sind 2,4,6-Pyrimidintrionderivate sind Barbitursäure (2,4,6-Pyrimidintrion) selbst, 1-Benzyl-5-phenylbarbitursäure (1-(Phenylmethyl)-5-Phenyl-2,4,6-Pyrimidintrion), 5-Butylbarbitursäure (5-Butyl-2,4,6-Pyrimidintrion), 1-Cyclohexyl-5-ethylbarbitursäure (1-Cyclohexyl-5-Ethyl-2,4,6-Pyrimidintron) oder 2-Thiobarbitursäure (4,6-Dihydroxy-2-Mercaptopyrimidin), 1 ,3-Cyclohexandion, 2-Methyl-1,3-cyclohexandion, 1,3-Cyclopentandion, 2-Methyl-1,3-cyclopentandion, 4,4-Dimethyl-1,3-cyclohexandion, 5,5-Dimethyl-1,3-cyclohexandion (Dimedon), 2,2-Dimethyl-1,3-dioxan-4,6-dion oder 2,2,5-Trimethyl-1,3-dioxan-4,6-dion, 3-Oxoglutarsäuredimethylester, und/oder Diethyl-1,3-acetondicarboxylat, Ethylcyanoacetat, Methylcyanoacetat oder 2-Ethylhexylcyanoacetat, oder in der DE 10 2011 078 785 genannte 1,3-Dioxoverbindungen. Es sei hier auf die WO 2015/154861 A1 verwiesen, die diesbezüglich durch Bezugnahme aufgenommen wird.

Die DE 10 2011078785 offenbart Härterkomponenten mit CH-azide Verbindungen anderer Strukturformeln, die ebenfalls als Härtersysteme eingesetzt werden können.

WO 2016/206777 A1 zeigt die Verwendung von Iminen, vor allem Aldiminen bzw. Ketiminen, und deren Vorstufen (Aldehyde oder Ketone und Amine) als Initiatoren in Härtersystemen für die radikalische Polymerisation und entsprechende Kunstharz-Befestigungssysteme. Auch hier kommt mindestens ein Aktivator in Form eines Metallsalzes zum Einsatz. Diese sind ebenfalls als Härtersysteme für erfindungsgemäße Kunstharz-Befestigungssysteme geeignet - Aldimin- und/oder Ketimin-basierte Systeme sind als Härter besonders bevorzugt.

Die als solche zugesetzten oder zur Synthese der Imine geeigneten primären Amine umfassen beispielsweise Mono-, Di- oder Polyamine, oder Mischungen von zwei oder mehr davon. Das Molekülgerüst der Mono- und/oder Di- und/oder Polyamine kann aliphatische, heteroaliphatische, alicyclische, heterocyclische, aromatische, aliphatisch-aromatische und Silan/ Siloxan-Molekülstrukturen oder zwei oder mehr unabhängig ausgewählte davon enthalten. Im Molekül können primäre und/oder sekundäre und tertiäre Aminogruppen vorhanden sein, jedoch muss mindestens eine primäre Aminogruppe (-NH₂), zur Ausbildung eines Aldimins bzw. Ketimins, enthalten sein.

Die Mono-, Di- oder Polyamine sind bevorzugt aus der Gruppe der Alkyl- oder Alkylen(mono oder di)amine (wie z.B.: 2-Methylpentandiamin, oder 2,2,4- oder 2,4,4-Trimethylhexamethylendiamin), der Heteroalkyl- oder Heteroalkylen(mono oder di)amine (wie beispielsweise 1,13-Diamino-4,7,10-trioxatridecan, kommerziell erhältliche aminfunktionalisierte Polyoxyalkylene [Jeffamine] der Firma Huntsman Corp, wie insbesondere Jeffamin ED600, oder z.B.: Triethylentetramin und/oder höhere Homologe), der Cycloalkyl- oder Cycloalkylen(mono oder di)amine (wie z.B.: Isophorondiamin, 1,3-Bisaminomethylcyclohexan, TCD-Diamin), der Heterocyloalkyl- oder Heterocycloalkylen(mono oder di)amine (wie z.B.: Aminoethylpiperazin), der Aminole bzw. Aminoalkohole (wie z.B. 1,3-Diaminopropan-2-ol), und der aliphatisch-aromatischen(mono oder di)amine (wie 1,3- oder 1,4-Benzoldimethanamin), ausgewählt und/oder aus der Gruppe der aminosilanisierten Füllstoffe.

Weiterhin bevorzugt können die Mono-, Di- oder Polyamine aus der Gruppe der Aminoamide, Polyaminoamide, Mannich-Basen und der Aminaddukte (Epoxid-Amin-Addukte wie beispielsweise in EP 0 387 418 A2 beschrieben, Isocyanat-Amin-Addukte [beispielsweise aus nicht umgesetzten Aminogruppen der Iminsynthese oder aus den oben genannten Aminolen - bei Verwendung der Aminole erfolgt bevorzugt zuerst die Umsetzung zum Imin und im Anschluss die Addition an das Isocyanat], Bucherer-Addukte und Michael-Additions-Addukte) und Aminoalkylsilane, die mindestens eine hydrolysierbare Gruppe, wie Alkoxy, z.B. Methoxy oder Ethoxy - am Silicium gebunden - beinhalten, ausgewählt sein.

Bei den als solche zugesetzten oder zur Synthese der Aldimine und/oder Ketimine verwendeten bzw. geeigneten Aldehyden und Ketonen handelt es sich insbesondere um solche der Formel (III): 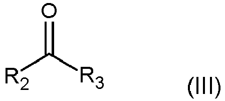 worin:
R₂, R₃ unabhängig voneinander Wasserstoff und/oder einen unsubstituierten oder
substituierten und/oder einen gegebenenfalls Doppelbindungen und/oder Heteroatome aufweisenden ein- oder mehrfach verzweigten oder geradkettigen organischen Rest,
welcher aliphatische, heteroaliphatische, alicyclische, heterocyclische Molekülstrukturen und/oder Kombinationen aus den vorgenannten Molekülstrukturen umfassen kann, bedeutet.

Bevorzugt handelt es sich bei den Aldehyden und/oder Ketonen um Verbindungen, welche mindestens ein oder mehrere (primäre und/oder sekundäre) Wasserstoffatome am zur Carbonylgruppe stehenden α-Kohlenstoffatom aufweisen. Beispiele derartiger Aldehyde sind Propanal, Valeraldehyd, Isovaleraldehyd, oder Methoxyacetaldehyd, oder 3,7-Dimethyl-6-octenal (Citronellal) oder 3,7-Dimethyl-7-hydroxyoctanal (Hydroxycitronellal). Als derartige Ketone seien hier beispielhaft auch Methylisobutylketon, Aceton, oder Methylethylketon oder 6-Methyl-5-hepten-2-on erwähnt.

Besonders bevorzugt handelt es sich bei den Aldehyden und/oder Ketonen um Verbindungen, welche am zur Carbonylgruppe stehenden α-Kohlenstoffatom eine Doppelbindung und/oder Verzweigung aufweisen. Hierdurch weisen die besonders bevorzugten Aldehyde und/oder Ketone nur noch ein (tertiäres) Wasserstoffatom am zur Carbonylgruppe stehenden α-Kohlenstoffatom auf. Beispiele besonders bevorzugter Aldehyde sind Isobutyraldehyd, 2-Ethylhexanal, 2-Methylbutanal, 2-Ethylbutanal, 2-Methylvaleraldehyd, 2,3-Dimethylvaleraldehyd, Cyclohexylcarboxaldehyd, oder 3,7-Dimethyl-2,6-octadienal (Citral), 3-(4-tert-Butylphenyl)-2-methylpropanal (Lilial, Lysmeral), Tetrahydrofuran-3-carboxaldehyd, Tetrahydro-2-furancarboxaldehyd, 4-Formyltetrahydropyran, Tetrahydro-2H-pyran-2-carbaldehyd oder Tetrahydro-pyran-3-carbaldehyd. Als besonders bevorzugte Ketone seien hier beispielhaft Diisopropylketon, 3-Methyl-2-pentanon, 2-Methylcyclohexanon oder β-lonone genannt, oder vorzugsweise Isobutyraldehyd.

DE 10 2015 118 136 A1 zeigt Härtersysteme, die ein oder mehrere katalytisch wirksame Basen sowie Carbonylverbindungen beinhalten. Diese sind ebenfalls als Härtersysteme für erfindungsgemäße Kunstharz-Befestigungssysteme geeignet.

Unabhängig vom Typ des Härters gilt: Der Anteil des Härters an einem erfindungsgemäßen Kunstharz-Befestigungssystem insgesamt liegt dabei vorzugsweise in einem Bereich von 1 bis 80 %, z.B. 2 bis 70 %. In besonderen Ausführungsformen liegt der Peroxidgehalt < 1 % bezogen auf den Härter, in einer weiteren Möglichkeit liegt der Peroxidgehalt < 1 % bezogen auf alle Komponenten, vorzugsweise bei 0 % bei Verwendung eines anderen Härters mit alternativen Initiatoren und Aktivatoren in Form von Metallsalzen wie oben und gegebenenfalls nachfolgend erwähnt.

Bei den Aktivatoren in Form eines Metallsalzes, was auch Metallkomplexe und Metalloxide einschließt, verwendeten Bestandteile handelt es sich vorzugsweise um ein oder mehrere Metallsalze insbesondere von organischen und/oder anorganischen Säuren mit Metallen, z.B. ausgewählt aus Kupfer, Eisen, Vanadium, Mangan, Cer, Kobalt, Zirkonium, oder Wismut, oder Gemischen von zwei oder mehr davon. Bevorzugt sind Metallsalze ausgewählt aus der Gruppe, die aus Vanadium, Eisen, Mangan und Kupfer besteht, insbesondere in Form von Salzen oder Komplexen mit anorganischen Säureresten, wie Sulfat- und/oder Carbonat-Resten und/oder organischen Säureresten, beispielsweise Carboxylatresten, - wobei die organischen Säuren vorzugsweise gesättigt sind - wie Carboxylate mit CH₃, C₂-C₂₀-Alkyl, einem C₆-C₂₄-Arylrest oder C₇-C₃₀-Aralkylrest, beispielsweise Oktoat, z.B. 2-Ethylhexanoat (Isooctanoat), Neodecanoat, oder Acetylacetonat. Besonders bevorzugt sind Mangancarboxylate, wie Mn-acetat oder Mn-octoat, Kupfercarboxylate, wie Kupferoctoat, Kupferneodecanoat oder Kupfernaphthenat, Kupferchinolate, Eisencarboxylate, wie Eisenoctoat und/oder Vanadiumcarboxylate und/oder die Gruppe der Metallsalze mit anorganischen Säuren, welche beispielsweise Eisenchlorid, Eisensulfat, Kupfersulfat und Kupferchlorid umfasst. Wo Kupfer erwähnt wird, handelt es sich vorzugsweise im Kupfer(II)-salze.

Zusätze für eine erfindungsgemäß zu verwendende bzw. enthaltene Härterkomponente sind neben dem oder den Initiatoren und/oder Härtersystemen (insbesondere mit Radikalbildnern und Aktivatoren) wie zuvor beschrieben, ausgewählt aus Füllstoffen wie oben genannt, Trockenmitteln (z.B. Zeolith), Weichmachern oder Phlegmatisierern, wie Phthalsäure, Sebacinsäureester, Ethylenglykoldibenzoat oder Ethylenglykoldibenzoat, Stabilisatoren (insbesondere wie oben genannt), Rheologiehilfsmitteln, wie pyrogenem Kieselgel als solchem oder in hydrophobisierter Form, Pigmenten oder Farbstoffen, und ferner nicht reaktiven Verdünnungsmitteln und Netzmitteln; oder Gemischen von zwei oder mehr der genannten Stoffe. Derartige Zusätze können vorzugsweise insgesamt in Gewichtsanteilen von insgesamt 0 bis 90 %, beispielsweise von 0,1 bis 40 %, zugesetzt sein.

In einer besonderen und vorteilhaften Ausführungsform der Erfindung sind die härtbaren Komponenten (Kunstharzkomponente umfassend Reaktivharz und die zugehörige Härterkomponente) eines erfindungsgemäßen Kunstharz-Befestigungssystems vor der Verwendung voneinander getrennt in einem Zwei- oder ferner Mehrkomponentensystem oder -kit aufbewahrt, bevor sie im Verwendungsfall am gewünschten Ort (z.B. bei oder in einem Loch oder Spalt, wie Bohrloch) miteinander vermischt werden.

Unter einem mehrkomponentigen Zwei- oder ferner Mehrkomponentensystem ist insbesondere ein Zwei- oder (ferner) Mehrkomponentenkit (vorzugsweise ein Zweikomponentenkit) umfassend eine (oder im Falle des Zweikomponentensystems bestehend aus einer) Komponente (A), welche ein oder mehrere Reaktivharze beinhaltet, wie oben und unten beschrieben, und den jeweils zugehörigen Härter als Komponente (B) wie oben und nachfolgend definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise ineinander verschachtelte Patronen, wie Ampullen; sowie insbesondere Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäßen Kunstharz-Befestigungssystems mit oben und nachstehend genannten Zusammensetzungen zur Aufbewahrung vor der Nutzung enthalten sind, wobei vorzugsweise auch ein Statikmischer zum entsprechenden Kit gehört. Die Kammern der Mehr- oder insbesondere Zweikomponentenkartuschen können rein aus Kunststoffen oder als Folienbeutel (insbesondere Mehrschicht-Folienbeutel) ausgebildet werden.

Als Material für einen erfindungsgemäß verwendbaren Folienbeutel können Kunststoffe Verwendung finden, wie kompostierbare Kunststoffe, z.B. auf Basis von Stärke, Polyester, Polyesteramide, Polyurethane, Polivinylalkohole, Cellulose, Lignocellulose, Polymilchsäure, Polyhydroxyalkanoate, oder Mischungen von zwei oder mehr derartigen Materialien. Bevorzugt sind wasser-, feuchtigkeits- und wasserdampfdichte Materialien, insbesondere solche, die (z.B. durch Aufdampfen) metallisiert sind und/oder Verbundfolien aus einer Kunststoff- und einer Metall-, insbesondere Aluminium-Folie sind.

Bei der Verwendung eines erfindungsgemäßen Kunstharz-Befestigungssystems zur Befestigung von Verankerungsmitteln Löchern (insbesondere Bohrlöchern) oder Aussparungen in (Bau-)Substraten, wie Mauerwerk oder Beton oder Holz, erfolgt die Verwendung insbesondere in Form eines Mehr-, wie vor allem Zwei-Komponentenkits, wodurch die reaktiven Bestandteile erst am Ort der Verwendung miteinander in Kontakt treten und reagieren können und so beispielsweise zur Fixierung der Verankerungselemente in den besagten Löchern oder Aussparungen dienen können.

Auch entsprechende Verfahren oder Methoden insbesondere zum Befestigen von Verankerungselementen (Verankerungsmitteln) in Löchern oder Spalten, bei denen eine erfindungsgemäßes ein- oder mehrkomponentiges Kunstharz-Befestigungssystem zum Einmörteln (Einkleben) von Verankerungsmitteln verwendet wird, wobei die Komponenten des Kunstharzbefestigungssystems und ein Verankerungsmittel (= Verankerungselement) nacheinander, insbesondere zuerst die Komponenten des Kunstharz-Befestigungssystems, dann das Verankerungsmittel, oder (mindestens im wesentlichen) gleichzeitig, in ein Loch oder einen Spalt in einem Substrat (auch in einem gerissenen Substrat, wie in gerissenem Beton) eingebracht werden, oder Mischformen dieser beiden Varianten mit jeweils teilweisem Einbringen, bilden eine Ausführungsform der Erfindung.

Die nachfolgenden Beispiele illustrieren die Erfindung, ohne ihren Umfang einzuschränken.

Die Bestimmungsmethoden für die Ermittlung von Parametern sind auch für den allgemeinen Teil der Beschreibung gültig:

### Auszugsversuche aus Beton / Bestimmung der Lastwerte

Für Auszugsversuche mit Gewindestangen M12 und zur Bestimmung der Lastwerte der erfindungsgemäßen Kunstharz-Befestigungssysteme und der Referenzen wird, gemäß EAD330499-02-0601, wie folgt vorgegangen:
Zur Bestimmung der Lastwerte der ausgehärteten Massen verwendet man eine Gewindestange M12, die in ein Bohrloch in Beton mit einem Durchmesser von 14 mm und einer Bohrlochtiefe von 84 mm mit dem erfindungsgemäßen Kunstharz-Befestigungssystem eingedübelt wird. Man ermittelt die mittlere Versagenslast durch zentrisches Ausziehen der Gewindestange mit enger Abstützung unter Verwendung hochfester Gewindestangen. Es werden jeweils 5 Gewindestangen eingedübelt und nach 24 Stunden Aushärtung bei Raumtemperatur ihre Lastwerte bestimmt. Die Lastwerte wurden zum einen unter Referenzbedingungen (trockenes, gereinigtes Bohrloch (R1) (Ausblasen mit Handausbläser (2x), Bürsten mit Drahtbürste (2x), Ausblasen mit Handausbläser (2x)) und zum anderen in einem feuchten und halbgereinigten Bohrloch (B7) (Ausblasen mit Handausbläser (1x), Bürsten mit Drahtbürste (1x), Ausblasen mit Handausbläser (1x)) bestimmt. Bei den hierbei ermittelten Lastwerten handelt es sich um den Mittelwert der 5 Einzelmessungen.

Die nachfolgende Tabelle 1 erklärt die verwendeten Abkürzungen und Begriffe, die in den Beispielen verwendet werden:

**Tabelle 1: Erklärungen der verwendeten Abkürzungen**

| **Abkürzung / Begriff** | **Erklärung** |
|---|---|
| E2BADMA | Ethoxyliertes Bisphenol-A-Dimethacrylat (technisches Produkt: verschiedene Ethoxylierungsgrade möglich) |
| PEG200DMA | Polyethylenglykol-200-Dimethacrylat (Mittelwert n ≈ 4, technisches Produkt: verschiedene Ethylenglykol-Wiederholeinheiten möglich) |
| BDDMA | 1,4-Butandiodimethacrylat |
| DPGDMA | Dipropylenglykoldimethacrylat |
| EP150DMA | Bisomer EP150DMA (GEO Specialty Chemicals) |
| MEMO | 3-Methacryloxypropyltrimethoxysilan |
| BDC8 | Borchers Deca Copper 8 (Kupfer2+neodecanoat; aktiver Inhalt: 7,8 - 8,2%, Borchers GmbH |
| 6HS | Calcilit 6HS (Calciumcarbonat hydrophobiert; Alpha Calcit) |
| KS hydrophob | pyrogene oberflächenbehandelte Kieselsäure |
| Aldimin | Aldimin aus Jeffamine ED600 und Isobutyraldehyd |
| TDMAP | 2,4,6-Tris-(dimethylaminomethyl)-phenol (technisches Produkt: verschiedene Alkylierungsgrade in Form von "Dimethylaminomethyl" möglich) |
| KS hydrophil | pyrogene Kieselsäure |
| charakteristische Verbundspannung | entspricht der 5% Fraktile: statistisch ermittelter Wert |
| Designverbundspannung | Bemessungswert des Widerstands für den Versagensfall beim Herausziehen bei Zuglast |
| EAD | European Assessment Document |

### Beispiel 1: Rezepturzusammensetzungen der Referenz- und der erfindungsgemäßen Kunstharz-Befestigungssysteme mit erfindungsgemäßen Propylenglykoldimethacrylaten und Block-Alkylenglykoldi(meth)acrylaten und deren Auszugswerte

Eine fischer 10:1 Kartusche wird jeweils mit den nachfolgenden Bestandteilen der Tabelle 2 befüllt:

**Tabelle 2: Bestandteile der Mörtel- und Härterzusammensetzungen**

| Komponente / Bestandteil | Referenz hydrophil [%] | Referenz hydrophob [%] | Erfindungsgemäß Dipropylenglykoldi methacrylat [%] | Erfindungsgemäß Block-Alkylenglykoldi(m eth)acrylat [%] |
|---|---|---|---|---|
| *Komp. A (10 Volumenteile)* | | | | |
| E2BADMA | 25,0 | 25,0 | 25,0 | 25,0 |
| PEG200DMA | 5,0 | - | - | - |
| BDDMA | - | 5,0 | - | - |
| DPGDMA | - | - | 5,0 | - |
| EP150DMA | - | - | - | 5,0 |
| MEMO | 5,0 | 5,0 | 5,0 | 5,0 |
| BDC8 | 0,6 | 0,6 | 0,6 | 0,6 |
| Inhibitor*¹ | 0,2 | 0,2 | 0,2 | 0,2 |
| Quarzmehl | 22,4 | 22,4 | 22,4 | 22,4 |
| Quarzsand | 30,0 | 30,0 | 30,0 | 30,0 |
| 6HS | 10,0 | 10,0 | 10,0 | 10,0 |
| KS hydrophob | 1,8 | 1,8 | 1,8 | 1,8 |
| | | | | |
| Dichte [g/mL] | 1,77 | 1,76 | 1,75 | 1,78 |
| Viskosität [Pas] | 180 | 160 | 160 | 166 |
| | | | | |

| *Komp. B (1 Volumenteil)* | | | | |
|---|---|---|---|---|
| Härterzusammensetzung [%] | | | | |
| Aldimin | 51,3 | | | |
| Farbe | 0,8 | | | |
| Quarzmehl | 45,2 | | | |
| Rheologieadditiv*² | 0,1 | | | |
| KS hydrophil | 2,6 | | | |
| | | | | |
| Dichte [g/mL] | 1,45 | | | |
| Viskosität [Pas] | 180 | | | |

| | | | | |
|---|---|---|---|---|
| *¹ Inhibitor: Kombination (50/50) aus TEMPOL (1%ig in PEG200DMA) und TDMAP (50%ig in PEG200DMA) *² als Rheologieadditiv können "Thixbooster" eingesetzt werden, welche die rheologischen Eigenschaften in Verbindung mit hydrophiler Kieselsäure verstärken; beispielsweise aus dem Hause Byk, wie Byk P2720 oder Byk R605. | | | | |

Sowohl die Referenzbeispiele als auch die erfindungsgemäßen Beispiele wurden einem robustness (Robustheits-) Test wie unter "Auszugsversuche aus Beton / Bestimmung der Lastwerte" beschrieben, unterzogen. Die nachfolgende Tabelle 3 zeigt die ermittelten Verbundspannungen und den zugehörigen Quotienten aus B7 und R1.

**Tabelle 3: ermittelte Kennwerte für Robustheitsprüfung der erfindungsgemäßen Reaktivverdünner und der Referenzen**

| EAD-Kennwerte | Referenz hydrophil | Referenz hydrophob | Erfindungsgemäß Propylenglykoldi methacrylat | Erfindungsgemäß Block-Alkylenglykoldi(m eth)acrylat |
|---|---|---|---|---|
| R1 | 23,5 | 19,4 | 20,3 | 20,5 |
| B7 | 16,5 | 15,8 | 18,4 | 19,8 |
| Quotient B7/R1 | 0,70 | 0,81 | 0,91 | 0,97 |
| robustness factor α* | 1,4 | 1,2 | 1,0 | 1,0 |

| | | | | |
|---|---|---|---|---|
| *ergibt sich aus dem EAD | | | | |

Aus Tabelle 3 ist ersichtlich, dass Kunstharz-Befestigungssysteme mit den erfindungsgemäßen Reaktivverdünnern bestehend aus Propylenglykoldi(meth)acrylaten und/oder Block-Alkylenglykoldi(meth)acrylaten im Robustheitstest deutlich robustere Systeme mit deutlich höherem Quotienten B7/R1 liefern. Daraus resultieren gemäß EAD330499-02-0601 Tabelle 2.2.5.6.1 deutlich niedrigere Abminderungsfaktoren, wodurch die Gesamtperformance bzw. die Verbundspannung, welche für die tatsächliche Bemessung herangezogen werden darf, steigt. Das nachfolgende Beispiel 2 soll dies nochmals rein illustrativ verdeutlichen.

### Beispiel 2: Beispielhafte Ergebnisse, um den Einfluss von Abminderungsfaktoren resultierend aus dem robustness test zu verdeutlichen

Tabelle 4 zeigt typische Kennwerte, wie sie in europäisch technischen Bewertungen angegeben werden. Der Einfachheit halber wird der Abminderungsfaktor hier vom robustness factor abgeleitet.

**Tabelle 4: typische Kennwerte europäisch technischer Bewertungen**

| | Referenz | Erfindungsgemäß |
|---|---|---|
| charakteristische Verbundspannung [N/mm2] | 12,0 | 10,0 |
| Abminderungsfaktor (aus dem robustness test) | 1,4 | 1,0 |
| Designverbundspannung (charakteristische Verbundspannung / robustness factor) | 8,6 | 10,0 |

Das Beispiel 2 soll verdeutlichen, dass "robuste" Kunstharz-Befestigungssysteme, welche eine durchweg ausgeglichene Performance aufweisen, für die tatsächliche Designverbundspannung von Vorteil sind. Grund hierfür ist, dass die durchweg ausgeglichene Performance, die z.B. im robustness Test ermittelt wird, zu niedrigeren Abminderungsfaktoren führt. Das Beispiel 2 zeigt, dass das erfindungsgemäße Kunstharz-Befestigungssystem mit ausgeglichener Performance (und damit einhergehend geringeren Abminderungsfaktoren) trotz geringerer charakteristischer Verbundspannung als die Referenz eine höhere Designverbundspannung zu bieten hat. Diese Widerstandfähigkeit gegenüber externen Einflüssen, wie sie unter Baustellenbedingungen auftreten können, gilt es zu stärken, um den Endnutzer ein robustes und verlässliches Produkt in die Hand geben zu können.

## Patentansprüche

1. Ein radikalisch härtbares Kunstharz-Befestigungssystem, welches ein oder mehrere Reaktivverdünner, die durch Vorhandensein von einer oder mehreren Propylenglykol- bzw. Propylenoxid-Wiederholeinheiten gekennzeichnet sind, welche mindestens eine reaktive (Meth)Acrylatgruppe direkt oder indirekt an den Enden aufweisen, und welche ausgewählt sind aus der Gruppe bestehend aus Propylenglykoldi(meth)acrylat, Dipropylenglykoldi(meth)acrylat, ferner Tripropylenglykoldi(meth)acrylat; ferner Tetrapropylenglykoldi(meth)acrylat und Block-Alkylenglykoldi(meth)acrylaten der Formel CYXYC in Form von mit (Meth)acrylat terminal veresterten ethoxylierten Propylenglykolen in einem zentralen Propylenoxidblock (X) mit 5 oder mehr (vorzugsweise bis 20) linear angeordneten 1,2-Propylenoxideinheiten, der an seinen beiden Enden mit unabhängig voneinander zwei oder mehr Ethylenoxideinheiten verlängert ist (Y), die an beiden Enden je eine (Meth)acryloylgruppe (C) tragen, oder ferner Mischungen von zwei oder mehr der genannten Reaktivverdünner, beinhaltet.

2. Ein radikalisch härtbares Kunstharz-Befestigungssystem nach Anspruch 1, **dadurch gekennzeichnet, dass** der Reaktivverdünner aus Dipropylenglykoldi(meth)acrylat und ferner Tripropylenglykoldi(meth)acrylat, und ferner einer Mischung davon, ausgewählt ist.

3. Ein radikalisch härtbares Kunstharz-Befestigungssystem nach Anspruch 1, wobei der Reaktivverdünner ein Block-Alkylenglykoldi(meth)acrylat der Formel CXYXC in Form von mit (Meth)acrylat terminal verestertem ethoxyliertem Propylenglykol mit zentralem Propylenoxidblock (X) mit 6 bis 15 linear angeordneten 1,2-Propylenoxideinheiten, der an beiden Enden mit zwei bis 4 Ethylenoxideinheiten verlängert ist (Y), die an beiden Enden je eine (Meth)acryloylgruppe (C) tragen, ist.

4. Ein radikalisch härtbares Kunstharz-Befestigungssystem nach einem der Ansprüche 1 bis 3, wobei die Gruppen (C) Methacrylatgruppen sind.

5. Ein radikalisch härtbares Kunstharz-Befestigungssystem nach einem der Ansprüche 1 bis 4, **dadurch gekennzeichnet, dass** es nur einen (1) einzigen der dort genannten erfindungsgemäßen Reaktivverdünner beinhaltet und vorzugsweise keinen weiteren Reaktivverdünner,

6. Ein radikalisch härtbares Kunstharz-Befestigungssystem nach einem der Ansprüche 1 bis 5, in mehr-, insbesondere zwei-komponentiger Form, welches den oder die Reaktivverdünner in eine radikalisch härtbaren Reaktivharzkomponente (A) beinhaltet und eine Härterkompontente (B) beinhaltet, insbesondere in Form eines Zwei-Komponentenkits.

7. Ein radikalisch härtbares Kunstharz-Befestigungssystem nach einem der Ansprüche 1 bis 6, zur Verbesserung der Leistungsfähigkeit in schlecht gereinigten und/oder feuchten Bohrlöchern in mineralischen Untergründen, **dadurch gekennzeichnet, dass** es einen möglichst hohen Quotienten B7/R1 aus ermittelter Verbundspannung im feuchten und schlecht gereinigten Bohrloch B7 zu Verbundspannung in trockenem, gut gereinigten Bohrloch R1, aufweist, insbesondere einen Quotienten B7/R1 von ≥ 0,80 vorzugsweise von ≥ 0,89, wobei B7/R1 gemäß EAD330499-02-0601 Edition 04/2023 (EAD) bestimmbar oder vorzugsweise bestimmt ist.

8. Ein radikalisch härtbares Kunstharz-Befestigungssystem nach einem der Ansprüche 1 bis 7, **dadurch gekennzeichnet, dass** neben dem und/oder den im jeweiligen Anspruch genannten Reaktivverdünner(n) mindestens ein Haftvermittler in Form eines Silans und/oder Siloxans enthalten ist.

9. Ein radikalisch härtbares Kunstharz-Befestigungssystem nach einem der Ansprüche 1 bis 8, worin der oder die im jeweiligen Anspruch genannte(n) Reaktivverdünner in einem Massenanteil im Bereich von 0,1 bis 50 %, insbesondere von 0,5 bis 40 %, besonders bevorzugt bei 1 bis 25 %, enthalten ist/sind.

10. Ein radikalisch härtbares Kunstharz-Befestigungssystem nach einem der Ansprüche 1 bis 8, worin, bezogen auf die Reaktivharzkomponente (A) und davon nur den Reaktivharzanteil und die Masse des Reaktivverdünners, der Massenanteil im Bereich von 0,5 bis 60 %, vorzugsweise 1 bis 50 %, insbesondere von 2 bis 30 %, liegt.

11. Ein radikalisch härtbares Kunstharz-Befestigungssystem nach einem der Ansprüche 1 bis 10, welches als Reaktivharz in der Reaktivharzkomponente ein oder mehrere Epoxy(meth)acrylate, insbesondere der Formel (I) wie unten gezeigt; stärker bevorzugt ein oder mehrere Urethan(meth)acrylate, oder insbesondere ein oder mehrere alkoxylierte, aromatische (Meth)acrylate, insbesondere ein oder mehrere propoxylierte oder insbesondere ethoxylierte aromatische Diol-, wie Bisphenol-A-, Bisphenol-F- oder Novolak-(insbesondere di-)(meth)acrylate, vorzugsweise solche der Formel (II), enthält;
wobei die Formeln wie folgt definiert sind: 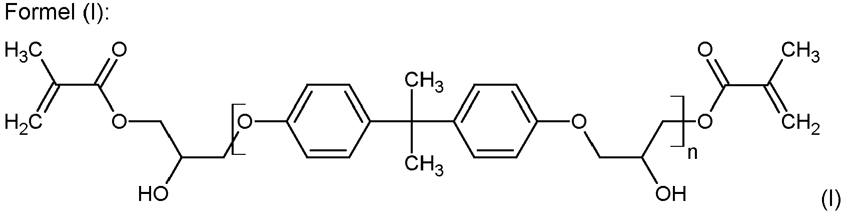
worin n für eine Zahl größer oder gleich 1 steht, wobei, wenn Gemische verschiedener Moleküle mit unterschiedlichen n-Werten vorliegen und durch die Formel repräsentiert werden, auch nicht-ganzzahlige Zahlen für n als Mittelwert möglich sind; 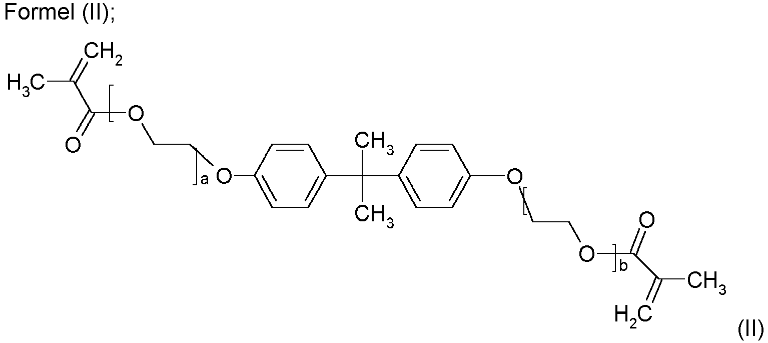
worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind, wobei, wenn Gemische verschiedener Moleküle mit unterschiedlichen (a und b)-Werten vorliegen und durch die Formel repräsentiert werden, auch nicht-ganzzahlige Zahlen als Mittelwert möglich sind, und wobei im Falle der propoxylierten Verbindungen anstelle der Gruppe [-O-CH₂-CH₂]ₐ eine Anzahl "a" an unverzweigten oder vorzugsweise verzweigten Oxypropylengruppen vorliegt.

12. Ein radikalisch härtbares Kunstharz-Befestigungssystem nach einem der Ansprüche 1 bis 10, beinhaltend eine Härterkomponente (B), welche ein oder mehrere radikalbildende Peroxide, Azide, Azoverbindungen, Tetraazene, für ATRP typische halogenhaltige Initiatoren, oder ein radikalisch härtendes Härtersystem, das mindestens einen Aktivator in Form eines Metallsalzes und einen Radikalkettenstarter ausgewählt aus Thiol- und/oder Thiolester-Gruppen beinhaltenden Verbindungen, einer CH-acide Verbindung, ein oder mehreren Aldiminen, Ketiminen, Vorstufen von Aldiminen und/oder Ketiminen in Form von Aminen und Aldehyden und/oder Ketonen; und/oder Aldehyde und Ketone, katalytisch wirksame Basen und Carbonylverbindungen oder radikalisch polymerisierbare Verbindungen beinhaltet; wobei ein oder mehrere Aldimine und/oder Ketimine besonders bevorzugt sind.

13. Ein radikalisch härtbares Kunstharz-Befestigungssystem nach einem der Ansprüche 1 bis 12, welches ein oder mehrere weitere übliche Zusätze oder Additive, insbesondere einen Füllstoff, und vorzugsweise einen Haftvermittler, beinhaltet.

14. Ein radikalisch härtbares Kunstharz-Befestigungssystem nach einem der Ansprüche 1 bis 13, welches einen oder mehrere weitere reaktive Verdünner zusätzlich zu dem oder den Reaktivharzverdünnern beinhaltet.

15. Ein radikalisch härtbares Kunstharz-Befestigungssystem nach einem der Ansprüche 1 bis 14 mit einer Reaktivharzkomponente (A) und einer Härterkomponente (B), bei welchem das Volumenverhältnis der Komponenten A : B bei (3-20) : 1, insbesondere bei (5-12) : 1, vorzugsweise bei 10 : 1 liegt.

16. Reaktivharzkomponente für ein radikalisch härtbares Kunstharz-Befestigungssystem nach Anspruch 5, welches nur einen (1) einzigen der dort definierten Reaktivverdünner beinhaltet, oder nach einem der Ansprüche 1 bis 4 oder 6 bis 15, welche ein oder mehrere Reaktivverdünner wie in einem der vorstehenden Ansprüche definiert und ein radikalisch härtbares Reaktivharz beinhaltet.

17. Verwendung eines radikalisch härtbaren Kunstharz-Befestigungssystems wie in einem der Ansprüche 1 bis 15 als Klebemittel in der Befestigungstechnik, insbesondere zur Befestigung von Verankerungsmitteln in Bohrlöchern oder Spalten, vor allem in einem Bausubstrat; insbesondere zur Befestigung von Verankerungsmitteln in halbgereinigten und/oder feuchten Bohrlöchern in einem Bausubstrat, insbesondere Mauerwerk oder Beton.

18. Verwendung eines Reaktivverdünners wie für ein radikalisch härtbares Kunstharz-Befestigungssystem in einem der Ansprüche 1 bis 4 definiert zur Erhöhung der Robustheit eines radikalisch härtbaren Kunstharz-Befestigungssystems, definiert als geringer Unterschied des Wertes für die Verbundspannung im feuchten und schlecht gereinigten Bohrloch B7 im Vergleich zur Verbundspannung im trockenen, gut gereinigten Bohrloch R1, vorzugsweise mit einem möglichst hohen Verhältnis von B7/R1 von ≥ 0,80, insbesondere einem Quotienten B7/R1 von 0,90 bis 1,00, wobei B7/R1 gemäß EAD330499-02-0601 Edition 04/2023 (EAD) bestimmbar oder vorzugsweise bestimmt ist

19. Verfahren zur Herstellung eines radikalisch härtbaren Kunstharz-Befestigungssystems nach einem der Ansprüche 1 bis 15, **dadurch gekennzeichnet, dass** den übrigen Bestandteilen, insbesondere einer Reaktivharz-Komponente bei einem Mehrkomponentensystem, Reaktivverdünner wie in einem der Ansprüche 1 bis 15 definiert zugemischt werden und insbesondere, im Falle von Mehrkomponentensystemen in separaten Kompartimenten, in Verpackungen abgefüllt werden.

20. Verfahren zur Befestigung von Verankerungsmitteln in Bohrlöchern oder Spalten unter Verwendung eines in einem der Ansprüche 1 bis 15 definierten radikalisch härtbaren Kunstharz-Befestigungssystems, das mindestens einen der dort erwähnten radikalisch härtbaren Reaktivverdünner beinhaltet.
